# EUROPÄISCHE PATENTSCHRIFT

(11) **EP 3 803 191 B1**
(45) Veröffentlichungstag und Bekanntmachung des Hinweises auf die Patenterteilung: **23.08.2023**
(21) Anmeldenummer: 19723032.9
(22) Anmeldetag: 29.04.2019
(51) Int. Cl.: F17C 13/12

(54) **TANKVORRICHTUNG ZUR TEMPERATURDRUCKENTLASTUNG EINES BRENNSTOFFZELLENTANKS**
TANK DEVICE FOR THE TEMPERATURE PRESSURE RELIEF OF A FUEL CELL TANK
DISPOSITIF DE RÉSERVOIR SERVANT À DÉCHARGER UNE PRESSION D'UN RÉSERVOIR À PILES À COMBUSTIBLE

(30) Priorität: 07.06.2018 DE 102018209057
(43) Veröffentlichungstag der Anmeldung: 14.04.2021
(73) Patentinhaber: Robert Bosch GmbH, 70442 Stuttgart (DE)
(72) Erfinder: KEMMER, Helerson, 71665 Vaihingen (DE)
(86) Internationale Anmeldenummer: PCT/EP2019/060887
(87) Internationale Veröffentlichungsnummer: WO 2019/233677

(56) Entgegenhaltungen:
- EP-A1- 2 361 797
- EP-A2- 1 452 794
- DE-A1-102006 017 541
- DE-A1-102011 114 722
- DE-A1-102014 003 586
- DE-A1-102016 214 577
- DE-A1-102017 221 073
- US-A1- 2008 066 805
- US-A1- 2010 193 045
- US-A1- 2015 252 911
- US-A1- 2016 033 085

## Beschreibung

Die Erfindung betrifft eine Tankvorrichtung zur Temperaturdruckentlastung eines Brennstoffzellentanks, insbesondere zur Speicherung von Wasserstoff, beispielsweise zur Anwendung in Fahrzeugen mit Brennstoffzellenantrieb. Weiterhin kann die Erfindung auch in Fahrzeugen mit erdgasbasierten ("Compressed natural gas", CNG) Verbrennungsmotoren eingesetzt werden.

### Stand der Technik

Die nicht vorveröffentlichte DE 10 2018 201 055 A1 beschreibt ein Gasspeichersystem mit mindestens zwei Speichereinheiten, welche die Speicherung eines gasförmigen Brennstoffs, insbesondere Wasserstoff, Methan oder Erdgas, unter einem verhältnismäßig hohen Innendruck von beispielsweise bis zu 700 bar ermöglicht. Dabei weisen die Speichereinheiten jeweils ein Steuerventil auf, mittels welchem die Speichereinheit zugeschaltet oder abgeschaltet werden kann. Die Speichereinheiten sind über ein Leitungssystem miteinander und mit einer Ausgangsleitung verbunden. Die Ausgangsleitung ist dabei beispielsweise mit einer Verbrauchereinheit wie einer Brennstoffzelleneinheit oder einem Verbrennungsmotor verbunden.

Die Sicherheitsvorrichtungen für solch eine Speichereinheit wie in DE 10 2018 201 055 A1 sind normiert. Dabei muss jede Speichereinheit ein automatisch absperrbares Überströmventil und ein Schmelzsicherungsventil aufweisen. So kann das Überströmventil beispielsweise bei einem Unfall mit dem Gasspeichersystem oder bei einem Bruch einer Leitung die Speichereinheit verschließen, so dass kein Gas aus der Speichereinheit austreten kann. Weiterhin soll das Schmelzsicherungsventil beispielsweise bei einem Brand oder einer Temperaturerhöhung über einen vorbestimmten Schwellwert hinaus sicherstellen, dass beispielsweise der Wasserstoff aus der Speichereinheit hinausgeleitet werden kann, um einer Explosion der Speichereinheit oder sogar des gesamten Gasspeichersystems vorzubeugen.

Die DE 10 2016 214577 A1 beschreibt ein Druckbehältersystem mit einem ersten Druckbehälter und einem zweiten Druckbehälter zum Speichern eines Brennstoffs für ein Fahrzeug.

Für diese Sicherheitsvorkehrungen ist eine Vielzahl von Ventilen notwendig, wodurch die Komplexität des gesamten Gasspeichersystems sowie dessen Kosten erhöht werden.

### Vorteile der Erfindung

Die erfindungsgemäße Tankvorrichtung mit den kennzeichnenden Merkmalen des Anspruchs 1 weist demgegenüber den Vorteil auf, dass in einfacher und effizienter Weise und bei gleichzeitiger Gewährleistung aller Sicherheitsmaßnahmen die Anzahl der Ventile reduziert wird, um kostengünstig und bauraumoptimiert die Funktionsweise der Tankvorrichtung zu verbessern.

Dazu umfasst die Tankvorrichtung zur Temperaturdruckentlastung eines Brennstoffzellentanks mindestens zwei Tankbehälter und eine mit den Tankbehältern verbindbare Zufuhrleitung. Jeder Tankbehälter umfasst dabei mindestens ein druckgesteuertes Überströmventil, welches Überströmventil zwischen dem jeweiligen Tankbehälter und der Zufuhrleitung angeordnet ist. Darüber hinaus ist in der Zufuhrleitung ein zentrales Absperrventil angeordnet. Erfindungsgemäß umfasst die Tankvorrichtung eine Steuerleitung mit Längsverbindungen und einer Querverbindung, wobei die Längsverbindungen an den Tankbehältern angeordnet sind und über die Querverbindung miteinander verbunden sind. Vorteilhafterweise weist die Steuerleitung einen ersten Leitungsabschnitt und einen zweiten Leitungsabschnitt auf, wobei der erste Leitungsabschnitt über ein erstes Rückschlagventil mit der Zufuhrleitung verbindbar ist.

So kann die Steuerleitung über den ersten Leitungsabschnitt mit einem Gas, wie beispielsweise Wasserstoff, befüllt werden.

So kann in einfacher und kostengünstiger Weise die Effizienz der Tankvorrichtung optimiert und die Sicherheit der Tankvorrichtung erhöht werden.

In einer ersten vorteilhaften Weiterbildung ist es vorgesehen, dass das zentrale Absperrventil als Magnetabsperrventil ausgebildet ist.

Vorteilhaft ist es vorgesehen, dass der zweite Leitungsabschnitt über ein zweites Rückschlagventil eine Verbindung zwischen der Zufuhrleitung und einer Abblasleitung öffnet oder schließt. So können in einfacher und effektiver Weise bei beispielsweise einem Brand außerhalb der Tankbehälter mittels der Steuerleitung die einzelnen Tankbehälter entleert werden.

In vorteilhaften Verwendungen ist die Tankvorrichtung in einem Fahrzeug angeordnet. Dabei sind die Längsverbindungen der Steuerleitung im Fahrzeug unterhalb der Tankbehälter angeordnet. So kann beispielsweise bei einem Brand, welcher vom Boden des Fahrzeugs herrührt, durch Temperaturerhöhungen und damit Druckerhöhungen in der Steuerleitung der Wasserstoff unverzüglich aus den Tankbehältern geleitet werden, um einer möglichen Explosion der Tankbehälter vorzubeugen.

### Zeichnungen

In der Zeichnung sind Ausführungsbeispiele einer erfindungsgemäßen Tankvorrichtung zur Temperaturdruckentlastung eines Brennstoffzellentanks dargestellt. Es zeigt in
- Fig. 1: eine Draufsicht einer Tankvorrichtung aus dem Stand der Technik,
- Fig. 2: eine Draufsicht eines möglichen Ausführungsbeispiels einer erfindungsgemäßen Tankvorrichtung.

### Beschreibung der Ausführungsbeispiele

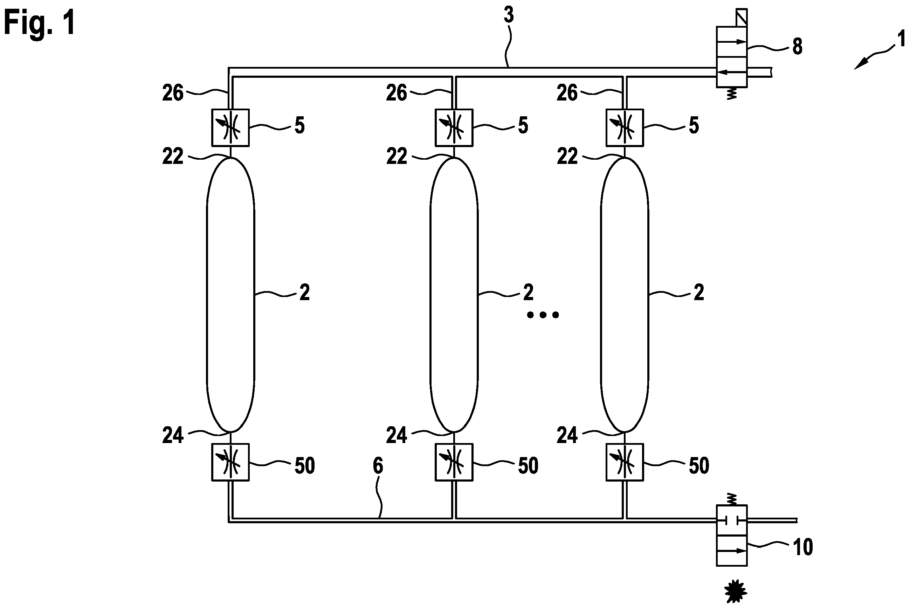

In der **Fig.1** ist eine eine aus dem Stand der Technik bekannten Tankvorrichtung zur Temperaturdruckentlastung eines Brennstoffzellentanks gezeigt. Die Tankvorrichtung 1 weist mehrere Tankbehälter 2 auf, welche hier mit Wasserstoff befüllt sind. Weiterhin ist jeder Tankbehälter 2 an einem ersten Ende 22 über eine Abzweigung 26 mit einer Zufuhrleitung 3 verbunden, wobei in der Abzweigung 26 der Zufuhrleitung 3 ein Überströmventil 5 angeordnet ist. Das Überströmventil 5 ist im normalen Betriebszustand geöffnet, so dass Wasserstoff aus den Tankbehältern 2 in die Zufuhrleitung 3 austreten kann.

In der Zufuhrleitung 3 ist weiterhin ein zentrales Absperrventil 8 angeordnet, welches hier als Magnetabsperrventil ausgebildet ist. Das Absperrventil 8 steuert so mit Hilfe eines Elektromagneten zentral die Wasserstoffzufuhr aus allen Tankbehältern 2 in Richtung eines Verbrauchers, hier einer Brennstoffzellenanordnung. Es kann je nach Steuerung auch einen Wasserstofffluss in Richtung der Tankbehälter 2 veranlassen.

Weiterhin ist jeder Tankbehälter 2 an einem anderen Ende 24 mit einer Ventilleitung 6 verbunden, wobei zwischen jedem einzelnen Tankbehälter 2 und der Ventilleitung 6 ein weiteres Überströmventil 50 angeordnet ist. Im normalen Betriebszustand sind auch die weiteren Überströmventile 50 geöffnet, so dass eine Verbindung zwischen dem Innern des Tankbehälters 2 und der Ventilleitung 6 geöffnet ist. In der Ventilleitung 6 ist ein zentrales Schmelzsicherheitsventil 10 angeordnet. Das Schmelzsicherheitsventil 10 ist im Normalfall geschlossen und öffnet lediglich im Brandfall oder bei Überschreitung eines vorbestimmten Temperaturschwellwertes von beispielsweise 105°C, so dass der Wasserstoff aus den Tankbehältern 2 über die Ventilleitung 6 ausgeleitet werden kann und eine mögliche Explosion der Tankbehälter 2 aufgrund eines zu hohen Drucks unterbunden wird. Die Überströmventile 5, 50 sind jeweils an den Enden 22, 24 der Tankbehälter 2 angeordnet, so dass im Falle eines Unfalls der Tankvorrichtung 1 oder bei einem Bruch der ersten Leitung 3 und/oder der Ventilleitung 6 die Überströmventile 5, 50 schließen und das Wasserstoff nicht aus dem Tankbehälter 2 austreten kann.

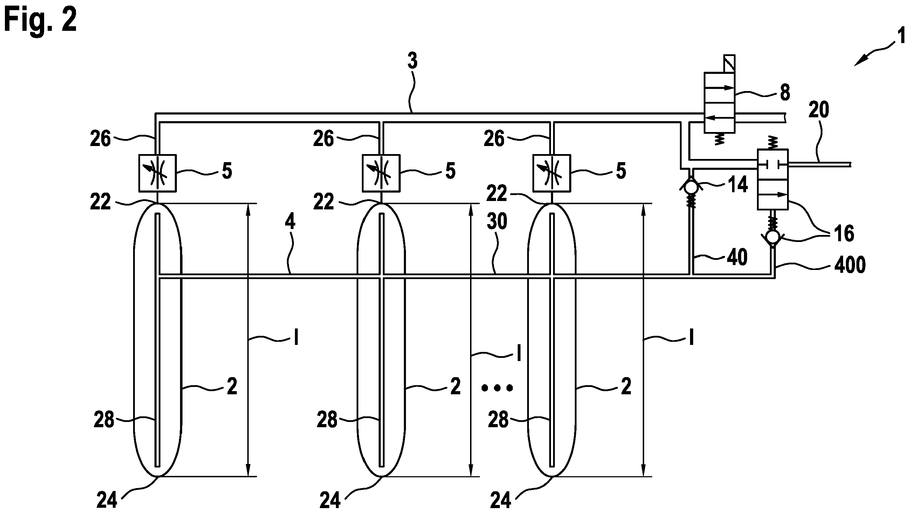

In der **Fig.2** ist eine Draufsicht eines möglichen Ausführungsbeispiels einer erfindungsgemäßen Tankvorrichtung zur Temperaturdruckentlastung eines Brennstoffzellentanks gezeigt. Bauteile mit gleicher Funktion wurden mit derselben Bezugsziffer bezeichnet wie in **Fig.1****.** Die Tankvorrichtung 1 weist hier ebenfalls eine Vielzahl von mit Wasserstoff befüllten Tankbehältern 2 auf, welche mit dem einen Ende 22 über das Überströmventil 5 mittels einer Abzweigung 26 mit der Zufuhrleitung 3 verbunden sind. Die Überströmventile 5 geben im Normalbetrieb eine Verbindung zwischen dem Innern des Tankbehälters 2 und der Zufuhrleitung 3 frei. In der Zufuhrleitung 3 ist wie auch im ersten Ausführungsbeispiel das als Magnetabsperrventil ausgebildete zentrale Absperrventil 8 angeordnet, worüber der Wasserstoffabfluss von den Tankbehältern 2 in Richtung der Brennstoffzellenanordnung ebenso wie der Wasserstoffzufluss zu den Tankbehältern 2 gesteuert werden kann. Lediglich im Falle eines Unfalls mit der Tankvorrichtung 1 oder bei einem Bruch der Zufuhrleitung 3 schließen die Überströmventile 5, so dass der Wasserstoff nicht aus dem Tankbehälter 2 austreten kann.

Das andere Ende 24 der Tankbehälter 2 ist hier verschlossen und die weiteren Überströmventile 50 entfallen. Die Tankvorrichtung 1 weist hier eine Steuerleitung 4 auf, welche als dünne, beispielsweise zylindrische Leitung mit einem Durchmesser von 1 mm ausgebildet ist. Die Steuerleitung 4 weist Längsverbindungen 28 und eine Querverbindung 30 auf, welche einen Winkel von 90 Grad zueinander aufweisen, wobei die Querverbindung 30 die Längsverbindungen 28 miteinander verbindet. Die Längsverbindungen 28 erstrecken sich entlang einer Länge I der Tankbehälter 2 an den Tankbehältern 2. Die Längsverbindungen 28 und die Querverbindung 30 können dabei alternativ einen anderen Winkel zueinander aufweisen.

Weiterhin weist die Steuerleitung 4 einen ersten Leitungsabschnitt 40 auf, welcher mit der Querverbindung 30 verbunden und mit der Zufuhrleitung 3 mittels eines ersten Rückschlagventils 14 in Gestalt eines Kugelrückschlagventils verbindbar ist. Die Steuerleitung 4 kann so über den ersten Leitungsabschnitt 40 mit Wasserstoff aus der Zufuhrleitung 3 befüllt werden.

Die Steuerleitung 4 weist außerdem einen zweiten Leitungsabschnitt 400 auf, welcher mit der Längsverbindung 28 verbunden ist. In dem zweiten Leitungsabschnitt 400 ist ein zweites Rückschlagventil 14 in Gestalt eines Kugelrückschlagventils angeordnet. Das zweite Rückschlagventil 14 öffnet oder sperrt je nach Druckverhältnisse in der Steuerleitung 4 eine Verbindung zwischen der Zufuhrleitung 3 und einer Abblasleitung 20.

Temperaturerhöhungen in der Nähe der Tankbehälter 2, beispielsweise durch einen Brand, führen in den Längsverbindungen 28 der Steuerleitung 4 an den Tankbehältern 2 zu Druckerhöhungen in der Steuerleitung 4, so dass bei Überschreitung eines vorbestimmten Druckschwellwerts das zweite Rückschlagventil 16 öffnet und eine Verbindung zwischen der Zufuhrleitung 3 und der Abblasleitung 20 freigibt. So kann der überschüssige Druck in den Tankbehältern 2 über die Abblasleitung 20 abgebaut und der Wasserstoff aus den Tankbehältern 2 geleitet werden.

Im zweiten Ausführungsbeispiel kann die Reduzierung der für die Sicherheit benötigten Ventile aufgrund der Einführung der Steuerleitung sogar noch erhöht werden.

Die in den Ausführungsbeispielen gezeigte erfindungsgemäße Tankvorrichtung 1 kann beispielsweise auch in Tankvorrichtungen für Fahrzeuge mit erdgasbasierten ("Compressed natural gas", CNG) Verbrennungsmotoren verwendet werden und ist nicht auf Tankvorrichtungen für die Anwendung bei brennstoffzellenbetriebenen Fahrzeugen beschränkt.

Die Längsverbindungen 28 der Steuerleitung 4 werden vorzugsweise unterhalb der Tankbehälter 2 in das Fahrzeug eingebaut, um beispielsweise bei einem Brand, welcher vom Boden des Fahrzeugs herrührt, auf effektive Weise durch Temperaturerhöhungen und damit Druckerhöhungen in der Steuerleitung 4 den Wasserstoff unverzüglich aus den Tankbehältern 2 zu leiten.

## Patentansprüche

1. Tankvorrichtung (1) zur Temperaturdruckentlastung eines Brennstoffzellentanks, wobei die Tankvorrichtung (1) mindestens zwei Tankbehälter (2) und eine mit den Tankbehältern (2) verbindbare Zufuhrleitung (3) umfasst, wobei jeder Tankbehälter (2) mindestens ein druckgesteuertes Überströmventil (5) umfasst, welches Überströmventil (5) zwischen dem jeweiligen Tankbehälter (2) und der Zufuhrleitung (3) angeordnet ist, wobei in der Zufuhrleitung (3) ein zentrales Absperrventil (8) angeordnet ist, **dadurch gekennzeichnet, dass** die Tankvorrichtung (1) eine Steuerleitung (4) mit Längsverbindungen (28) und einer Querverbindung (30) umfasst, wobei die Längsverbindungen (28) an den Tankbehältern (2) angeordnet sind und über die Querverbindung (30) miteinander verbunden sind, wobei die Steuerleitung (4) einen ersten Leitungsabschnitt (40) und einen zweiten Leitungsabschnitt (400) aufweist, wobei der erste Leitungsabschnitt (40) über ein erstes Rückschlagventil (14) mit der Zufuhrleitung (3) verbindbar ist.

2. Tankvorrichtung (1) nach Anspruch 1, **dadurch gekennzeichnet, dass** das zentrale Absperrventil (8) als Magnetabsperrventil ausgebildet ist.

3. Tankvorrichtung (1) nach Anspruch 1 oder 2, **dadurch gekennzeichnet, dass** der zweite Leitungsabschnitt (400) über ein zweites Rückschlagventil (16) eine Verbindung zwischen der Zufuhrleitung (3) und einer Abblasleitung (20) öffnet oder schließt.

4. Fahrzeug mit einer Tankvorrichtung (1) nach einem der vorhergehenden Ansprüche, **dadurch gekennzeichnet, dass** die Längsverbindungen (28) der Steuerleitung (4) im Fahrzeug unterhalb der Tankbehälter (2) angeordnet sind.

## Claims

1. Tank apparatus (1) for the temperature pressure release of a fuel cell tank, the tank apparatus (1) comprising at least two tank containers (2) and a feed line (3) which can be connected to the tank containers (2), each tank container (2) comprising at least one pressure-controlled overflow valve (5), which overflow valve (5) is arranged between the respective tank container (2) and the feed line (3), a central shut-off valve (8) being arranged in the feed line (3), **characterized in that** the tank apparatus (1) comprises a control line (4) with longitudinal connections (28) and a transverse connection (30), the longitudinal connections (28) being arranged on the tank containers (2) and being connected to one another via the transverse connection (30), the control line (4) having a first line portion (40) and a second line portion (400), it being possible for the first line portion (40) to be connected via a first check valve (14) to the feed line (3).

2. Tank apparatus (1) according to Claim 1, **characterized in that** the central shut-off valve (8) is configured as a solenoid shut-off valve.

3. Tank apparatus (1) according to Claim 1 or 2, **characterized in that** via a second check valve (16), the second line portion (400) opens or closes a connection between the feed line (3) and a relief line (20).

4. Vehicle with a tank apparatus (1) according to one of the preceding claims, **characterized in that** the longitudinal connections (28) of the control line (4) are arranged in the vehicle below the tank containers (2).

## Revendications

1. Dispositif de réservoir (1) pour une décharge en température et pression d'un réservoir à piles à combustible, dans lequel le dispositif de réservoir (1) comprend au moins deux conteneurs de réservoir (2) et un conduit d'alimentation (3) pouvant être raccordé aux conteneurs de réservoir (2), dans lequel chaque conteneur de réservoir (2) comprend au moins une vanne de décharge (5) commandée par pression, laquelle vanne de décharge (5) est disposée entre le conteneur de réservoir (2) respectif et le conduit d'alimentation (3), dans lequel une vanne d'arrêt centrale (8) est disposée dans le conduit d'alimentation (3),
**caractérisé en ce que** le dispositif de réservoir (1) comprend un conduit de commande (4) pourvu de raccordements longitudinaux (28) et d'un raccordement transversal (30), dans lequel les raccordements longitudinaux (28) sont disposés sur les conteneurs de réservoir (2) et sont raccordés les uns aux autres par le raccordement transversal (30), dans lequel le conduit de commande (4) présente une première section de conduit (40) et une deuxième section de conduit (400), dans lequel la première section de conduit (40) peut être raccordée au conduit d'alimentation (3) par l'intermédiaire d'un premier clapet antiretour (14).

2. Dispositif de réservoir (1) selon la revendication 1, **caractérisé en ce que** la vanne d'arrêt centrale (8) est réalisée sous forme de vanne d'arrêt magnétique.

3. Dispositif de réservoir (1) selon la revendication 1 ou 2, **caractérisé en ce que** la deuxième section de conduit (400) ouvre ou ferme un raccordement entre le conduit d'alimentation (3) et un conduit de purge (20) par l'intermédiaire d'un deuxième clapet antiretour (16) .

4. Véhicule, comprenant un dispositif de réservoir (1) selon l'une quelconque des revendications précédentes, **caractérisé en ce que** les raccordements longitudinaux (28) du conduit de commande (4) sont disposés sur le véhicule au-dessous du conteneur de réservoir (2).
